Europäisches Patentamt

(19) European Patent Office

Office européen des brevets

(11) Numéro de publication : **0 296 985 B1**

(12) **FASCICULE DE BREVET EUROPEEN**

(45) Date de publication du fascicule du brevet :
25.09.91 Bulletin 91/39

(51) Int. Cl.⁵ : **A23N 15/12**

(21) Numéro de dépôt : **88401616.3**

(22) Date de dépôt : **24.06.88**

(54) **Procédé de traitement de produits agricoles allongés, tels que légumes, et dispositif pour la mise en oeuvre de ce procédé.**

(30) Priorité : **25.06.87 FR 8708967**

(43) Date de publication de la demande :
**28.12.88 Bulletin 88/52**

(45) Mention de la délivrance du brevet :
**25.09.91 Bulletin 91/39**

(84) Etats contractants désignés :
**BE CH DE ES GB IT LI NL**

(56) Documents cités :
**BE-A- 628 928**
**DE-B- 1 216 002**
**DE-C- 689 495**
**DE-C- 845 870**
**US-A- 4 528 902**

(73) Titulaire : **FEMIA INDUSTRIE**
**225 à 231 rue de la Garenne B.P. 811**
**F-92008 Nanterre Cédex (FR)**

(72) Inventeur : **Coppolani, Joseph**
**2, rue de la Station**
**F-92360 Meudon-La-Foret (FR)**

(74) Mandataire : **Durand, Yves Armand Louis et al**
**Cabinet Z. Weinstein 20, Avenue de Friedland**
**F-75008 Paris (FR)**

## Description

La présente invention concerne un procédé de traitement de produits agricoles allongés, tels que légumes, ainsi que le dispositif pour l'exécution de ce procédé.

Le procédé suivant l'invention s'applique notamment aux machines ébouteuses de légumes tels qu'haricots verts ou aux machines trieuses de légumes tel qu'également des haricots verts.

On connaît une machine ébouteuse d'haricots verts du type comprenant essentiellement un tambour rotatif de traitement dont l'axe longitudinal est incliné par rapport à l'horizontale pour obtenir l'avancement des haricots verts de l'extrémité supérieure d'entrée à l'extrémité inférieure de sortie du tambour. Le tambour est formé de plaquettes, par exemple en une matière plastique spéciale, avec fentes spécialement étudiées pour assurer un éboutage optimum des haricots verts durant la rotation du tambour à l'aide d'un système à couteaux disposé extérieurement au tambour. Du fait de la rotation du tambour, les haricots verts sont amenés continuellement au sommet du tambour et tombent vers le fond actuel de celui-ci. Cependant, en raison de la grande hauteur de chute des haricots verts et de leur vitesse d'impact contre la surface de fond actuelle en mouvement du tambour, il se produit une détérioration des haricots verts notamment par abrasion sur la surface mouvante de fond du tambour.

Un tel phénomène se produit également dans le cas d'une machine trieuse d'haricots verts.

US-A-4528902 décrit une machine pour traiter des légumes comprenant un tambour de traitement horizontal rotatif, dont la surface interne de travail est adaptée pour interagir avec les légumes en vue de leur traitement et un tambour interne rotatif disposé coaxialement à l'intérieur du tambour de traitement et tournant suivant le même sens de rotation que le tambour de traitement. Les légumes, engagés par la surface de travail du tambour de traitement, s'élèvent jusqu'à ce que les forces gravitationnelles dépassent les forces centrifuges et tombent sur le tambour interne vers la surface de travail de façon à ainsi diminuer la hauteur effective de chute des légumes pour réduire leur vitesse d'impact.

Cependant, la diminution de hauteur effective de chute des légumes par la machine du brevet US antérieur n'est pas suffisante pour empêcher efficacement que se produise une détérioration de ces légumes lorsqu'ils tombent du tambour interne sur la surface de travail du tambour de traitement. De plus, ces légumes peuvent également se détériorer par rebondissement sur la surface du tambour interne.

La présente invention pour but d'éliminer les inconvénients ci-dessus des machines connues tout en conservant le rendement de celles-ci.

Pour cela, l'invention concerne un procédé de traitement de produits agricoles allongés, tels que légumes, ayant lieu au voisinage de la surface de paroi latérale interne d'un tambour rotatif, dont l'axe est sensiblement horizontal ou quelque peu incliné par rapport à l'horizontal, les produits amenés continuellement au sommet du tambour par la rotation de celui-ci tombant vers le fond actuel du tambour, et du type consistant à diminuer la hauteur effective de chute des produits pour réduire leur vitesse d'impact en arrêtant la chute des produits sur un tambour intérieur au bout d'une hauteur de chute initiale relativement courte et en les laissant tomber de nouveau jusqu'à ce fond, et caractérisé en ce qu'il consiste à transporter les produits sur ce tambour intérieur suivant une trajectoire hélicoïdale de façon non seulement à faire descendre les produits mais aussi à produire leur avancement longitudinal dans le tambour parallèlement à l'axe longitudinal de celui-ci jusqu'à un niveau plus bas situé à une hauteur relativement faible au-dessus du fond actuel du tambour.

L'invention concerne également un dispositif pour l'exécution du procédé défini ci-dessus, du type comprenant un tambour cylindrique de traitement rotatif à axe sensiblement horizontal ou quelque peu incliné et un tambour intérieur coaxial au tambour de traitement et caractérisé en ce que le tambour intérieur solidaire en rotation du tambour de traitement est muni d'au moins une bande enroulée hélicoïdalement autour de son axe à la façon d'au moins un filet de vis et de cloisons radiales s'étendant parallèlement à l'axe longitudinal du tambour en étant angulairement espacées les unes des autres de façon à délimiter, avec les spires de la bande hélicoïdale, des compartiments de réception et de transport des produits traités.

Selon une autre caractéristique du dispositif de l'invention, les spires de la bande hélicoïdale précitées peuvent avoir un pas sélectivement variable.

L'invention sera mieux comprise, et d'autres buts caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 représente une vue d'ensemble d'une machine ébouteuse de produits tels qu'haricots verts comportant le dispositif de l'invention ;

La figure 2 est une vue en coupe partielle suivant la ligne II-II de la figure 1 avec le tambour interne du dispositif de l'invention représenté partiellement en perspective ;

La figure 3 est une vue schématique transversale représentant le principe de fonctionnement du dispositif conforme à l'invention ; et

La figure 4 est une vue développée suivant la flèche IV de la figure 3.

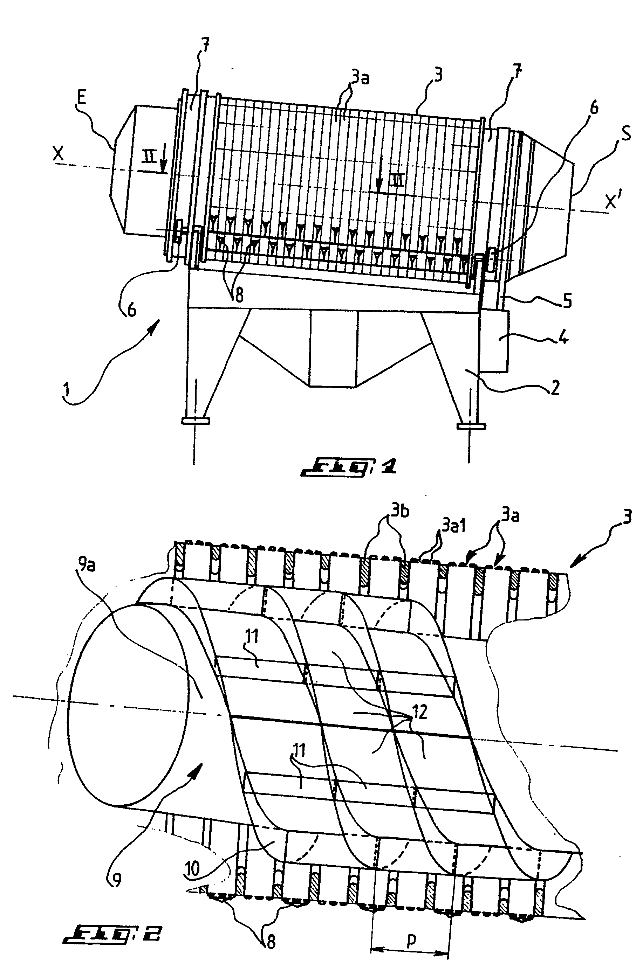

L'invention va être décrite en application à une machine ébouteuse d'haricots verts désignée par la référence 1 en figure 1.

Une telle machine comprend un bâti 2 de support d'un tambour cylindrique 3 entraîné en rotation autour de son axe longitudinal X-X' par un dispositif d'entraînement constitué d'un moteur électrique 4 et d'une courroie d'entraînement 5 montée dans une gorge annulaire réalisée au voisinage de l'une des extrémités du tambour 3. Le tambour 3 est supporté en rotation par l'intermédiaire de deux paires opposées de galets 6 dont les axes de rotation sont solidaires du bâti 2 et contactant respectivement deux pistes annulaires 7 du guidage en rotation situées respectivement au voisinage des deux extrémités du tambour 3. Ce dernier a sa surface de paroi latérale définie par une multitude de plaquettes 3a comportant chacune des fentes 3a1 spécialement étudiées pour assurer un éboutage optimum des haricots verts. Des cloisons annulaires 3b sont montées parallèlement les unes par rapport aux autres à l'intérieur du tambour 3 et font offices d'intercalaires de séparation des plaquettes adjacentes 3a. La machine ébouteuse comprend également un système à couteaux 8 par exemple triangulaires en appui sur la surface de la paroi latérale externe du tambour 3 pour assurer l'éboutage. L'axe longitudinal X-X' du tambour est incliné par rapport à l'horizontale pour obtenir l'avancement des haricots verts dans le tambour 3 de l'extrémité d'entrée E du tambour jusqu'à son extrémité de sortie S.

La structure et le fonctionnement d'une telle machine étant déjà connus, il n'est pas nécessaire de les décrire plus en détail.

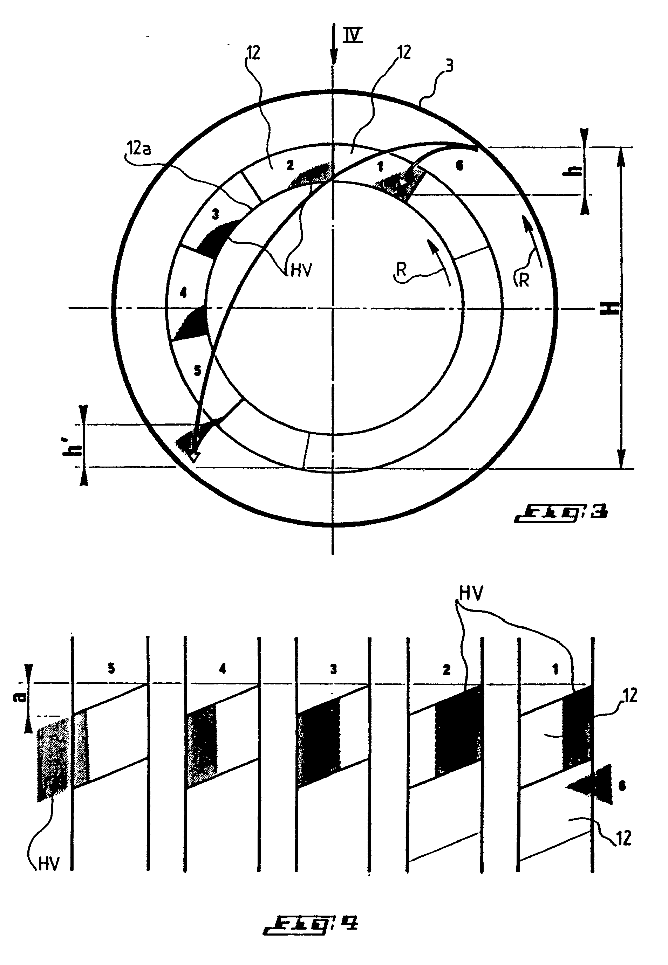

Cependant, comme représenté en figure 3, les haricots verts sont amenés continuellement au voisinage du sommet du tambour par la rotation de celui-ci et tombent vers le fond actuel du tambour 3 suivant une trajectoire approximativement elliptique d'une hauteur de chute H. En raison de la grande hauteur de chute H des haricots verts sur la surface de fond actuelle en mouvement du tambour, ceux-ci sont soumis à une détérioration notamment par abrasion sur le fond mouvant.

Pour éliminer l'inconvénient ci-dessus, l'invention consiste à équiper la machine ci-dessus connue d'un tambour cylindrique intérieur 9 coaxial au tabour de traitement 3 et solidaire en rotation de celui-ci. Le tambour 9 est solidarisé au tambour 3 par exemple par un berceau à trois bras (non représenté) à chaque extrémité cylindrique 9a du tambour 9. Le tambour intérieur 9 est muni d'une bande 10 enroulée hélicoïdalement autour de son axe longitudinal à la façon d'un filet de vis et de cloisons radiales 11 s'étendant parallèlement à l'axe longitudinal du tambour intérieur en étant angulairement espacées de façon équidistante les unes des autres de façon à délimiter, avec les spires de la bande hélicoïdale 10, des compartiments 12 de réception et de transport des haricots verts traités. La bande 10 et les cloisons 11 sont fixées au tambour 9 par exemple par soudage.

La figure 3 représente de façon explicite la façon dont des haricots verts HV sont reçus et transportés par un compartiment 12 du tambour intérieur 9. Lorsque les haricots verts sont amenés au voisinage du sommet du tambour 3 par la rotation de celui-ci suivant la flèche R, ils tombent dans le compartiment 12 qui arrête ainsi la chute des haricots verts au bout d'une hauteur de chute initiale relativement courte h. Les haricots verts sont ensuite transportés positivement dans le compartiment 12 suivant une trajectoire approximativement hélicoïdale de façon à faire descendre les haricots verts et également à les déplacer en direction axiale au tambour intérieur 3 jusqu'à un niveau plus bas situé à une hauteur relativement faible h' au dessus du fond actuel du tambour 3 et à les laisser tomber de nouveau jusqu'à ce fond. La figure 4 représente d'ailleurs le pas $a$ de déplacement axial des haricots verts dans le compartiment 12 lors de la rotation du tambour, les haricots verts étant de plus amenés à se déplacer d'une masse par glissement le long de la paroi convexe formant fond 12a du compartiment 12. Les haricots verts sont ensuite de nouveau amenés au voisinage du sommet du tambour 3 pour tomber dans un compartiment 12 situé en aval du premier compartiment ci-dessus mentionné et les haricots verts sont de nouveau transportés positivement suivant la trajectoire hélicoïdale de façon à produire leur avancement longitudinal d'un nouveau pas $a$ dans le tambour 3 parallèlement à l'axe longitudinal X-X', de celui-ci. Il est à noter que par l'utilisation du tambour interne 9, l'axe X-X', au lieu d'être incliné par raport à l'horizontale, peut être également sensiblement horizontal puisque la structure spécifique du tambour intérieur 9 autorisera toujours l'avancement longitudinal des produits dans le tambour 3.

On comprend ainsi que la présence du tambour intérieur 9 conforme à l'invention permet de diminuer la hauteur effective de chute des produits dans le tambour 3 pour réduire leur vitesse d'impact tout en produisant l'avancement longitudinal des produits dans le tambour 3 parallèlement à l'axe longitudinal de celui-ci.

La figure 2 représente le pas $p$ comme étant approximativement égal au double de la largeur d'une plaquette 3a mais il est bien entendu que ce pas peut être différent et par exemple égal à la largeur d'une plaquette 3a.

De plus, les spires de la bande hélicoïdale 10 peuvent avoir un pas sélectivement variable.

Par ailleurs, le tambour interne 9, au lieu d'être utilisé dans une machine ébouteuse comme ci-dessus, peut également être monté à l'intérieur d'un tambour de traitement d'un trieur d'haricots verts pour résoudre un problème identique à celui décrit en référence à la machine ébouteuse.

Enfin, le tambour 9, au lieu d'être solidaire du tambour de traitement 3, peut être monté de façon qu'il y ait un mouvement de rotation relatif entre le tambour 9 et le tambour 3.

## Revendications

1. Procédé de traitement de produits agricoles allongés, tels que légumes, ayant lieu au voisinage de la surface de paroi latérale interne d'un tambour rotatif (3), dont l'axe est sensiblement horizontal ou quelque peu incliné par rapport à l'horizontale, les produits amenés continuellement au sommet du tambour par la rotation de celui-ci tombant vers le fond actuel du tambour rotatif (3), et du type consistant à diminuer la hauteur effective de chute des produits pour réduire leur vitesse d'impact en arrêtant la chute des produits sur un tambour intérieur au bout d'une hauteur de chute initiale relativement courte (h) et en les laissant tomber de nouveau jusqu'à ce fond, caractérisé en ce qu'il consiste à transporter les produits sur le tambour intérieur suivant une trajectoire hélicoïdale de façon non seulement à faire descendre les produits mais aussi à produire leur avancement longitudinal dans le tambour rotatif (3) parallèlement à l'axe longitudinal (X-X') du tambour rotatif (3) jusqu'à un niveau plus bas situé à une hauteur relativement faible (h') au dessus du fond actuel du tambour rotatif (3).

2. Dispositif pour l'exécution du procédé selon la revendication 1, du type comprenant un tambour cylindrique de traitement rotatif (3) à axe sensiblement horizontal ou quelque peu incliné et un tambour intérieur (9) coaxial au tambour de traitement rotatif (3), caractérisé en ce que le tambour intérieur (9) est solidaire en rotation du tambour de traitement rotatif (3) et est muni d'au moins une bande (10) enroulée hélicoïdalement autour de son axe à la façon d'au moins un filet de vis et de cloisons radiales (11) s'étendant parallèlement à l'axe longitudinal (X-X') du tambour en étant angulairement espacées les unes des autres de façon à délimiter, avec les spires de la bande hélicoïdale (10), des compartiments (12) de réception et de transport des produits traités.

3. Dispositif selon la revendication 2, caractérisé en ce que les spires de la bande hélicoïdale (10) ont un pas sélectivement variable.

## Patentansprüche

1. Verfahren zur Behandlung von länglichen landwirtschaftlichen Erzeugnissen wie Gemüse, die in der Nachbarschaft der inneren Seitenwandfläche einer Drehtromme (3) stattfindet, deren Achse etwa waagerecht oder leicht zur Waagerechten geneigt ist, wobei die zum Scheitel der Trommer durch deren Drehung kontinuierlich zugeführten Erzeugnisse zum jeweiligen Boden der Drehtrommel (3) fallen und derjenigen Gattung, die darin besteht, die tatsächliche Fallhöhe der Erzeugnisse zu vermindern, um deren Aufprallgeschwindigkeit zu verringern indem man den Fall der Erzeugnisse auf einer inneren Trommel am Ende einer verhältnismässig kurzen ursprünglichen Fallhöhe (h) unterbricht und sie von neuem bis zu diesem Boden fallen lässt, **dadurch gekennzeichnet**, dass es darin besteht, die Erzeugnisse auf der inneren Trommel entlang einer spiralförmigen Laufbahn zu befördern, um nicht nur die Erzeugnisse herunter kommen zu lassen, sondern auch deren Vorwärtslängsbewegung in der Drehtrommel (3) parallel zur Längssachse (X-X') der Drehtrommel (3) bis zu einem in einer verhältnismässig kleinen Höhe (h') über den jeweiligen Boden der Drehtrommel (3) liegenden niedrigeren Pegel zu veranlassen.

2. Vorrichtung zur Durchführung des Verfahrens nach Anspruch 1, derjenigen Gattung, die eine zylindrische Behandlungsdrehtrommel (3) mit einer waagerechten oder leicht geneigten Achse und eine mit der Beahandlungsdrehtrommel (3) koaxiale innere Trommel (9) aufweist, **dadurch gekennzeichnet**, dass die innere Trommel (9) mit der Behandlungsdrehtrommel (3) drehfest ist und mit wenigstens einem um ihre Achse herum spiralförmig gewickelten Streifen (10) versehen ist, nach der Art wenigstens eines Schraubengewindes und von radialen Trennwänden (11), die sich parallel zur Längsachse (X-X') der Trommel · im Winkelabstand von einander erstrecken, um mit den Windungen des spiralförmigen Streifens (10) Zellen (12) zum Empfang und zur Beförderung der behandelten Erzeugnisse zu begrenzen.

3. Vorrichtung nach Anspruch 2, **dadurch gekennzeichnet**, dass die Windungen des spiralförmigen Streifens (10) eine wahlweise veränderbare Steigung haben.

## Claims

1. Method for the treatment of elongated agricultural products such as vegetables taking place in the vicinity of the inner side wall surface of a rotary drum (3) the axis of which is substantially horizontal or somewhat inclined with respect to the horizontal, the products continuously brought to the top of the drum by the rotation of the latter falling towards the instant bottom of the rotary drum (3), and of the type consisting in decreasing the effective height of fall of the products to reduce their impact speed by stopping the fall of the products on an inner drum at the end of a relatively short initial height of fall (h) and by letting them fall again down to this bottom, characterized in that it consists in conveying the products on the inner drum along a helical trajectory so as not only to make the products move downwards but also to produce their longitudinal advance in the rotary drum (3) in parallel relation to the longitudinal axis (X-X') of the rotary drum (3) down to a lower level located at a relatively small height (h') above the instant bottom of the rotary drum (3).

2. Device for carrying out the method according to claim 1, of the type comprising a rotary cylindrical treatment drum (3) with a substantially horizontal or somewhat inclined axis and an inner drum (9) coaxial with the rotary treatment drum (3), characterized in that the inner drum (9) is solid in rotation with the rotary treatment drum (3) and is provided with at least one strip (10) helically wound around its axis in the fashion of at least one screw thread and of radial partition walls (11) extending in parallel relation to the longitudinal axis (X-X') of the drum while being angularly spaced from one another so as to define with the turns of the helical strip (10), compartments (12) for receiving and transporting the treated products.

3. Device according to claim 2, characterized in that the turns of the helical strip (10) have a selectively variable pitch.

FIG. 1

FIG. 2

_Fig. 3_

_Fig. 4_